(19)

**Europäisches Patentamt**
**European Patent Office**
**Office européen des brevets**

(11) **EP 4 636 913 A1**

(12) **EUROPEAN PATENT APPLICATION**

(43) Date of publication:
**22.10.2025 Bulletin 2025/43**

(21) Application number: **25171290.7**

(22) Date of filing: **17.04.2025**

(51) International Patent Classification (IPC):
**H01M 50/105** (2021.01)    **H01M 50/533** (2021.01)
**H01M 50/54** (2021.01)

(52) Cooperative Patent Classification (CPC):
**H01M 50/533; H01M 50/105; H01M 50/54**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.04.2024 KR 20240052359**

(71) Applicant: **Samsung SDI Co., Ltd.**
**Yongin-si, Gyeongsangnam-do 17084 (KR)**

(72) Inventors:
• **YOON, Jungah**
**Yongin-si, Gyeonggi-do 17084 (KR)**

• **CHOI, Jongwoo**
**Yongin-si, Gyeonggi-do 17084 (KR)**
• **KIM, Sang Gyu**
**Yongin-si, Gyeonggi-do 17084 (KR)**
• **SONG, Chihoon**
**Yongin-si, Gyeonggi-do 17084 (KR)**
• **YUN, Jaehyeon**
**Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

(54) **RECHARGEABLE BATTERY**

(57) A rechargeable battery (100) includes an electrode assembly (200) including electrode plates (210) and electrode tabs (211) extending from each of the electrode plates (210) and having a bent portion (211a). An electrode lead (300) connected to the electrode tabs (211) has a bent portion, and a case (400) accommodates the electrode assembly (200). The electrode assembly (200), the electrode lead (300), and the case (400) satisfy a first equation E = B * (0.73 to 0.77) and a second equation C = D * 0.3 to 0.7. B indicates thickness of the electrode assembly (200), C indicates height of the electrode tabs (211), D indicates distance from or of a coupled portion of the case (400) and the electrode lead (300) to the electrode assembly (200), and E indicates distance between the bent portions (211a).

FIG. 3

EP 4 636 913 A1

**Description**

**FIELD**

The present disclosure relates to a rechargeable battery.

**BACKGROUND**

A typical pouch-type rechargeable battery has an electrode assembly located inside the battery case. It is common for a plurality of tabs extending from the electrode plate of the electrode assembly to be bent and welded to each other in a space between the electrode assembly and the battery case.

This electrode assembly has a plurality of tabs arranged to be bent as described above and is sealed by the battery case. Afterwards, a charge and discharge process is performed on the manufactured rechargeable battery, and as the electrode assembly is activated, shape abnormalities may occur in a number of tabs. Such shape abnormalities can cause short circuits, greatly reducing the operational safety of the rechargeable battery and causing defects.

**SUMMARY**

One or more embodiments include providing a rechargeable battery capable of preventing shape abnormalities of a plurality of tabs.

A rechargeable battery according to some embodiments may include an electrode assembly including a separation layer, a plurality of electrode plates stacked interposing the separation layer, and electrode tabs. Each electrode tab may extend from a respective one of the plurality of electrode plates and have a bent portion. An electrode lead connected to the electrode tabs may have a bent portion, and a case may accommodate the electrode assembly. The electrode tabs may include a lower side located adjacent to the electrode assembly and extending to the bent portion, and an upper side that is a remaining portion of the electrode tabs, which are disposed parallel to each other. The electrode assembly, the electrode lead, and the case may satisfy a first equation defining $E = B * (0.73$ to $0.77)$ and for example $= B * 0.74$, $= B * 0.75$ or $B * 0.76$, and a second equation defining $C = D * (0.3$ to $0.7)$, in particular $= D * (0.4$ to $0.6)$, in particular $= D * 0.5$, where B indicates a thickness of the electrode assembly, C indicates a height occupied by the electrode tab of the electrode assembly, D indicates a distance from or of a portion where the case and the electrode lead are coupled to each other to an end portion of the electrode assembly, and E indicates a distance from or of the bent portion in the electrode tab to the bent portion in the electrode lead. Thus, the distance E may for example be between the thickness B of the electrode assembly multiplied by 0.73, and the thickness B of the electrode assembly multiplied by 0.77. The height C occupied by the electrode tab of the electrode assembly may for example correspond to 30 % of, up to 40 % of, up to 50 % or half of, up to 60 % of or up to 70 % of the distance D from a portion where the case and the electrode lead are coupled to each other to an end portion of the electrode assembly.

The electrode assembly, the electrode lead, and the case may satisfy a third equation defining $B = A - (0.4$ mm to $0.5$ mm$)$ and for example $= A - 0.45$ mm, and a fourth equation defining $D = (B * 0.3, 0.4$ or $0.5) - 0.72$ mm, $0.73$ mm, $0.74$ mm, $0.75$ mm or $0.76$ mm, where A indicates a thickness of the rechargeable battery and mm is millimeters. Thus, the thickness B of the electrode assembly may for example be between the thickness A of the rechargeable battery, from which 0.4 mm is subtracted, and the thickness A of the rechargeable battery subtracted, from which 0.5 mm is subtracted. The distance D from a portion where the case and the electrode lead are coupled to each other to an end portion of the electrode assembly may for example correspond to the thickness B of the electrode assembly multiplied by 0.4, wherein 0.74 mm is subtracted from the result of the multiplication. "mm" corresponds to millimeters.

In the electrode lead, a portion coupled to the electrode tabs and a portion coupled to the case may be disposed to be perpendicular to each other.

The plurality of electrode plates may include a positive electrode plate and a negative electrode plate.

The electrode tab may include a positive electrode tab and a negative electrode tab.

The electrode assembly may include an insulation member surrounding a portion of the electrode lead coupled to the case.

A thickness of the rechargeable battery may be in a range of 1.5 mm to 6.5 mm.

A thickness of the electrode assembly may be in a range of 1 mm to 6 mm.

According to one or more embodiments, a method of manufacturing a rechargeable battery includes disposing an electrode assembly in a case. The electrode assembly may include a separation layer, a plurality of electrode plates stacked interposing the separation layer, and electrode tabs. Each electrode tab may extend from a respective one of the plurality of electrode plates, and the electrode tabs have a bent portion. An electrode lead may be connected to the electrode tabs and may have a bent portion. The electrode tabs may comprise a lower side located adjacent to the electrode assembly and extending to the bent portion of the electrode tabs, and an upper side that is a remaining portion of the electrode tabs, which are disposed parallel to each other. The electrode assembly, the electrode lead, and the case may satisfy a first equation defining $E = B * (0.73 \text{ to } 0.77)$ and for example $= B * 0.74, = B * 0.75$ or $B * 0.76$, and a second equation defining $C = D * (0.3 \text{ to } 0.7)$, in particular $= D * (0.4 \text{ to } 0.6)$, in particular $= D * 0.5$. B indicates a thickness of the electrode assembly, C indicates a height occupied by the electrode tabs of the electrode assembly, D indicates a distance from or of a portion where the case and the electrode lead are coupled to each other to an end portion of the electrode assembly, and E indicates a distance from or of the bent portion in the electrode tabs to the bent portion in the electrode lead. Thus, the distance E may for example be between the thickness B of the electrode assembly multiplied by 0.73, and the thickness B of the electrode assembly multiplied by 0.77. The height C occupied by the electrode tab of the electrode assembly may for example correspond to 30 % of, up to 40 % of, up to 50 % or half of, up to 60 % of or up to 70 % of the distance D from a portion where the case and the electrode lead are coupled to each other to an end portion of the electrode assembly. A distance from or of one element to another element may be a distance between these elements, e.g. a distance by which the elements are separated from each other.

A rechargeable battery according to the present disclosure may be manufactured to satisfy the first equation through the fourth equation. The method of manufacturing a rechargeable battery may manufacture the battery according to the invention. Therefore, according to some embodiments, during the process of manufacturing the rechargeable battery, electrode tabs and electrode leads are not manufactured in arbitrary dimensions, but are manufactured with standardized dimensions in conjunction with the size of the electrode assembly and the case. Further, applying the first and second equations for dimensioning the respective parts of the rechargeable battery result in an internal geometry of the rechargeable battery that reduced the risks of short circuits. Therefore, the rechargeable battery may be manufactured precisely according to the target design.

## BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:

FIG. 1 is a schematic perspective view showing a case of a rechargeable battery in an open state according to one or more embodiments.
FIG. 2 is a cross-sectional view showing the rechargeable battery of FIG. 1.
FIG. 3 is a simplified cross-sectional view of each member of the rechargeable battery of FIG. 2.
FIG. 4 is a graph showing exemplary optimal heights of a space between the case and electrode assembly with respect to the thickness of the electrode assembly according to some embodiments.
FIG. 5 is a CT image of a rechargeable battery manufactured by using equations defining relationships among dimensions according to some embodiments.
FIG. 6 is a CT image of a first electrode plate of a rechargeable battery manufactured by using the equations defining relationships among dimensions.
FIG. 7 is a CT image of a second electrode plate of a rechargeable battery manufactured by using the equations defining relationships among dimensions.
FIG. 8 is a CT image of a first electrode plate of a rechargeable battery manufactured without using the equations defining relationships among dimensions.
FIG. 9 is a CT image of a second electrode plate of a rechargeable battery manufactured without using the equations defining relationships among dimensions.

## DETAILED DESCRIPTION

Embodiments of the present disclosure will be described more fully hereinafter with reference to the accompanying figures. As those skilled in the art would realize, the described embodiments may be modified in various different ways, all without departing from the features of the disclosure or scope of the claims. The figures and their description are to be regarded as illustrative in nature and not restrictive.

In addition, in the accompanying figures, sizes or thicknesses of various components may be exaggerated for clarity, and like numbers refer to like elements throughout. As used herein, the term "and/or" includes any one and all combinations of one or more of the associated listed items. In addition, it should be understood that when an element X is referred to as being "connected to" an element Y, the element X can be directly connected to the element Y, or an intervening element Z may be present therebetween such that the element X and the element Y are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise", "include", "comprising" and/or "including," when used in this specification, specify the presence of stated features, numbers, steps, operations, elements, and/or components, but do not necessarily preclude the presence or addition of one or more other features, numbers, steps, operations, elements, components, and/or groups thereof.

It should be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

In addition, terms related to a space, such as "beneath", "below", "lower", "above", "upper", or the like, may be used for better understanding of elements or features shown in the drawing. It should be understood that such spatially relative terms are intended to encompass different orientations of the device in use or operation, in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both orientations of above and below.

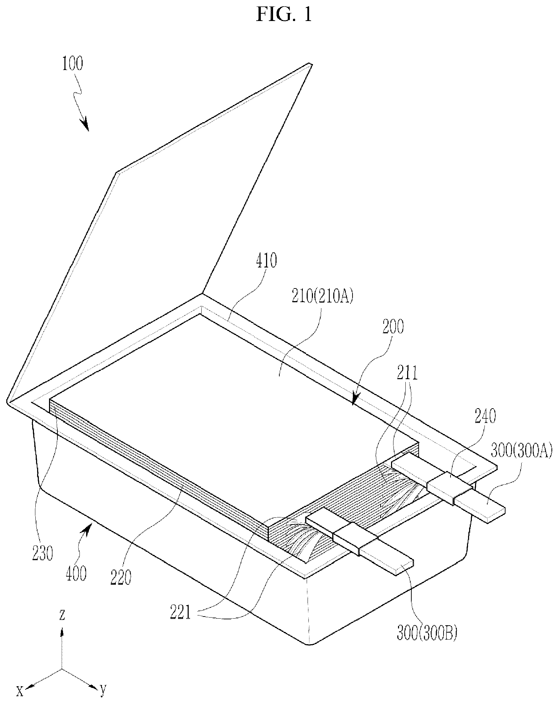

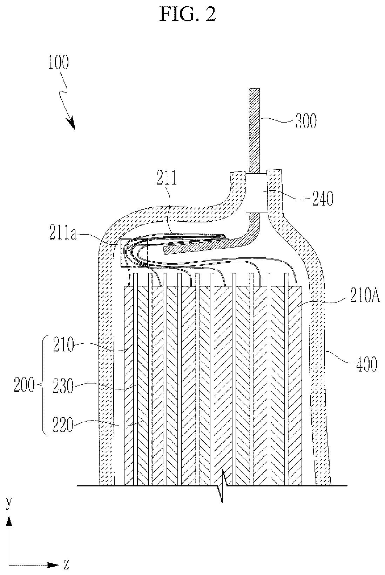

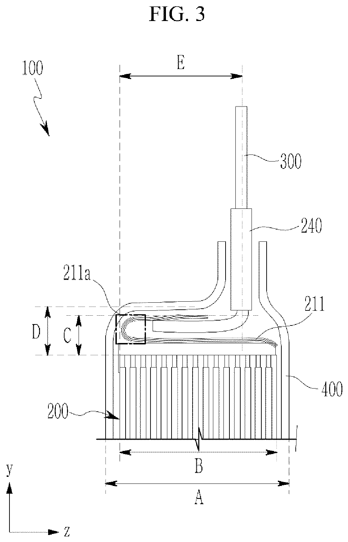

FIG. 1 is a perspective view showing a case of a rechargeable battery in an open state according to one or more embodiments. FIG. 2 is a cross-sectional view showing the rechargeable battery of FIG. 1. FIG. 3 is a simplified cross-sectional view of each member of the rechargeable battery of FIG. 2.

Referring to FIG. 1 to FIG. 3, a rechargeable battery 100 according to some embodiments may include an electrode assembly 200, an electrode lead 300 and a case 400.

The electrode assembly 200 may include a plurality of electrode plates 210 and 220 and a separation layer 230. In more detail, the plurality of electrode plates 210 and 220 may include a first electrode plate 210 and a second electrode plate 220.

The electrode assembly 200 may be in the form of a laminate including the first electrode plate 210, the second electrode plate 220, and the separation layer 230 being repeatedly wound or stacked.

For example, the electrode assembly 200 may be a stacked type, in which the electrode plates 210 and 220 are disposed to be stacked in multiple layers. Alternatively, the electrode assembly 200 may be of a repeatedly wound jelly-roll type. In the present disclosure, the electrode assembly 200 of the stacked type is illustrated and described as an exemplary embodiment but the description is not intended to be limited to the illustrated example.

In a typical manufacturing process of the electrode assembly 200 of the stacked type, a primary stack process and a secondary stack process are performed. In the primary stack process, full cathodes and full anodes may be stacked. The full cathodes may exclude a first electrode plate 210A, which is outermost among a plurality of first electrode plates 210. In addition, the full anodes may be the second electrode plates 220.

In the secondary stack process, a half cathode may be stacked on one side of at least one of the outermost sides, based on a stacking direction. The half cathode may be an outermost first electrode plate 210A among the first electrode plates 210.

FIG. 2 illustrates an exemplary embodiment of the electrode assembly 200 in which the half cathode is stacked on an outermost upper side of the electrode assembly 200. In alternate embodiments, the half cathode may be stacked on each of an outermost upper side and outermost both sides of the electrode assembly 200.

The full cathode and the full anode may be ones in which the active material is applied to both surfaces of a substrate, and the half cathode may be one in which the electrode plate layer is located on only one surface of a collector layer. The electrode plate layer may be an active material layer. Additional generally known details of the full cathode, the full anode, and the half cathode are not included herein.

The separation layer 230 may be interposed between each pair of the first electrode plate 210 and the second electrode plate 220. The separation layer 230 may prevent a short circuit of the first electrode plate 210 and the second electrode plate 220, and may allow movement of lithium ions. The separation layer 230 may be formed in a size relatively greater than the first electrode plate 210 or the second electrode plate 220.

The material of the separation layer 230 may be, for example, polyethylene, polypropylene, or a composite film of polyethylene and polypropylene, but is not limited thereto.

The separation layer 230 may be cut into unit lengths and disposed between the first electrode plate 210 and the second electrode plate 220. Alternatively, a single separation layer 230 in a ribbon shape may be disposed between pairs of the first electrode plate 210 and the second electrode plate 220 in a zigzag shape. Alternatively, the separation layer 230 may be installed to be wound in one direction between pairs of the first electrode plate 210 and the second electrode plate 220. The arrangement of the separation layer 230 is not limited to one particular form.

The electrode assembly 200 may include electrode tabs 211 and 221. The electrode tabs 211 and 221 may be formed to extend from each of the plurality of electrode plates 210 and 220 and to have a bent portion 211a.

For example, a central portion of the electrode tabs 211 and 221 may be bent. Therefore, the shape of the electrode tabs 211 and 221 may approximate a U-shape or V-shape. The electrode tabs 211 and 221 may be located in a space between an upper end of the electrode assembly 200 and an upper side of the case 400, according to the orientation shown in FIG. 2.

As described above, the plurality of electrode plates 210 and 220 may include the first electrode plates 210 and the second electrode plates 220. The electrode tabs 211 and 221 described above may extend from each of the first electrode plates 210 and the second electrode plates 220, respectively.

The electrode tabs 211 extending from the first electrode plates 210 may be coupled to each other as shown in FIG. 2, for example. Similarly, the electrode tabs 221 extending from the second electrode plates 220 may be coupled to each other. The electrode tabs 221 are not also shown for clarity of the illustration.

For explanatory purposes, the electrode tabs extending from each of the first electrode plates 210 may be referred to as a first electrode tabs 211, and the electrode tabs extending from each of the second electrode plates 220 may be referred to as a second electrode tabs 221.

An electrode lead 300 may be connected to the first electrode tabs 211 and to the second electrode tabs 221. Specifically, electrode lead 300A may be connected to the first electrode tabs 211, and electrode lead 300B may be connected to the second electrode tabs 221. That is, the first electrode plates 210 and the second electrode plates 220 may be electrically connected to the outside of rechargeable battery 100 through the electrode leads 300A and 300B (generally referred to as electrode lead 300).

A portion of the electrode lead 300 coupled to the electrode tab 221 and a portion of the electrode lead 300 coupled to the case 400 may be approximately perpendicular to each other with a bend in between. The shape of the electrode lead 300 may be, for example, L-shaped or nearly L-shaped.

An insulation member 240 may surround the portion of the electrode lead 300 that couples to the case 400. The insulation member 240 may prevent the electrode lead 300 and the case 400 from being electrically conductive.

The case 400 may accommodate the electrode assembly 200. The electrode assembly 200 described above may be accommodated in the case 400 together with electrolyte.

The case 400 may be one of a pouch type, a cylindrical type, and a prismatic type according to different exemplary embodiments. The case 400 of the pouch type may be manufactured by bending an exterior material of a plate shape, and then pressing or drawing a surface, to have a recess (i.e., pouch) on the surface.

The electrode assembly 200 may be accommodated in the recess (not shown). A sealing portion 410 may be provided on the exterior circumference of the recess, and while the electrode assembly 200 is accommodated in the recess, the sealing portion 410 may be sealed through a method such as heat fusion.

The plurality of electrode plates 210 and 220 may include a positive electrode plate and a negative electrode plate. More specifically, the first electrode plates 210 described above may be the negative electrode plates, and the second electrode plates 220 may be the positive electrode plates, or vice versa.

In addition, the electrode tabs 211 and 221 described above may include a positive electrode tab 221 and a negative electrode tab 211. The negative electrode tabs 211 may be ones extending from the first electrode plates 210, and the positive electrode tabs 221 may be ones extending from the second electrode plates 220.

The electrode tabs 211 and 221 may include lower and upper sides. For example, the electrode tabs 211 shown in FIG. 2 each include a lower side located adjacent to the electrode assembly 200 and extending to the bent portion 211a, and an upper side that is a remaining portion. The bent portion 211a may interconnect the lower side and the upper side. The upper side of the electrode tabs 211 are disposed parallel to each other as shown. Similarly, each of the electrode tabs 221 may include a lower side from the electrode assembly 200 to a bent portion and a remaining upper side. The rechargeable battery 100 with the exemplary shape of the electrode tabs 211 and 221 (i.e., with lower and upper sides as shown in FIG. 2, for example) may prevent the electrode assembly 200 from being pressed by the electrode tabs 211 and 221. In addition, the space occupied by the electrode tabs 211 and 221 within the case 400 may be minimized.

Exemplary dimensions of the electrode assembly 200, the electrode tabs 211 and 221, the electrode lead 300, and the case 400 required for manufacturing a rechargeable battery 100 according to some embodiments are described.

The electrode assembly 200, the electrode lead 300, and the case 400 included in a rechargeable battery 100 according to some embodiments may exemplarily satisfy the following, which may have the effect of preventing unnecessary increase/decrease in the length of the electrode tab or the electrode lead:

$$E = B * (0.73 \text{ to } 0.77) \qquad \text{[equation 1]}$$

$$C = D * 0.5 \qquad \text{[equation 2]}$$

In equations 1 and 2, B is a thickness of the electrode assembly 200, C is a height occupied by the electrode tabs 211 and 221, D is a distance from or of a portion where the case 400 and the electrode lead 300 are coupled to each other to an end portion of the electrode assembly 200, and E is a distance from or of the bent portion in the electrode tabs 211 and 221 to the bent portion in the electrode lead 300.

In more detail, the thickness B of the electrode assembly 200 may be a distance from or of a right-side end portion to a left-side end portion, based on a z-axis direction as indicated in FIG. 3. The electrode plates 210, 211 and the separation layer 230 may be arranged one after the other in the z-axis direction. The z-axis direction may be designated as stacking direction.

As also indicated in FIG. 3, a height C occupied by the electrode tab 211 may be a distance occupied within the case 400 by the electrode tab 211 along a y-axis direction. The y-axis direction may be perpendicular to the z-axis direction. The electrode plates 210, 211 and the separation layer 230 may at least in part be parallel to the y-axis direction.

As noted above, a portion of the case 400 may be coupled to the electrode lead 300. The distance D may be a distance value from a portion where the case 400 and the electrode lead 300 are coupled to each other to the electrode assembly 200 along the y-axis direction, as indicated in FIG. 3.

As noted above, the electrode tabs 211 may have a bent portion 211a and the electrode lead 300 may have a bent portion. The value E may be a distance value from the bent portion 211a of the electrode tabs 211 to the bent portion of the electrode lead 300 along the z-axis direction, as indicated in FIG. 3.

Equation 1 defines the length and shape of the electrode tabs 211 and the electrode lead 300 with respect to the thickness of the electrode assembly 200. According to equation 1, it may be preferable that the distance E from or of the bent portion in the electrode tabs 211 and 221 (e.g., 211a) to the bent portion in the electrode lead 300 is for example included in a range of 73 percent (%) to 77 % with respect to the thickness B of the electrode assembly 200, for example.

When the distance E from or of the bent portion in the electrode tabs 211 and 221 to the bent portion in the electrode lead 300 is for example generally 75% of the thickness B of the electrode assembly 200, the electrode tabs 211 and 221 on the lower side located adjacent to the electrode assembly 200 and the electrode tabs 211 and 221 on the upper side may be parallel to each other.

According to equation 2, it may be preferable that the height C occupied by the electrode tabs 211 is for example 50% of the distance D from or of the portion where the case 400 and the electrode lead 300 are coupled to each other, to an end portion of the electrode assembly 200.

When the height C occupied by the electrode tabs 211 exceeds for example 50% of the distance D from or of the portion where the case 400 and the electrode lead 300 are coupled to each other, to an end portion of the electrode assembly 200, the electrode tabs 211 may be unintentionally deformed such that the electrode tabs 211 on the lower side located adjacent to the electrode assembly 200 and the electrode tabs 211 on the upper side are not essentially parallel to each other. In addition, the space between the electrode assembly 200 and the case 400 may be excessively abundant.

To the contrary, when the height C occupied by the electrode tabs 211 is less than for example 50% of the distance D from or of the portion where the case 400 and the electrode lead 300 are coupled to each other, to an end portion of the electrode assembly 200, the space within the case 400 may not be sufficiently secured, such that the electrode plate may be pressed by the electrode tabs 211.

According to equation 1 and equation 2, the electrode tabs 211 disposed on the lower side located adjacent to the electrode assembly 200 and the electrode tabs 211 located on the upper side are parallel to each other.

According to some embodiments, the electrode assembly 200, the electrode lead 300, and the case 400 included in a rechargeable battery 100 may exemplarily satisfy equation 3, which may have the effect of optimizing the thickness of the electrode assembly accommodated in the case, and equation 4, which may have the effect of optimizing the space for accommodating the electrode tab or lead, shown below:

$$B = A - (0.4 \text{ mm to } 0.5 \text{ mm}) \qquad \text{[equation 3]}$$

$$D = (B * 0.4) - 0.74 (\text{mm}) \qquad \text{[equation 4]}$$

A may be a thickness of the rechargeable battery 100. The thickness A of the rechargeable battery 100 may be a distance from or of one exterior side of the case 400 to an opposite side exterior side along the z-axis direction, as indicated in FIG. 3.

According to EQ. 3, the thickness B of the electrode assembly 200 may be designed to be smaller than the thickness A of the rechargeable battery 100 by for example 0.4 millimeters (mm) to 0.5 mm. The thickness B of the electrode assembly 200 may be a value after performing the formation process (charge and discharge process). In addition, the thickness B of the electrode assembly 200 may be predetermined in consideration of swelling that may occur in the rechargeable battery 100.

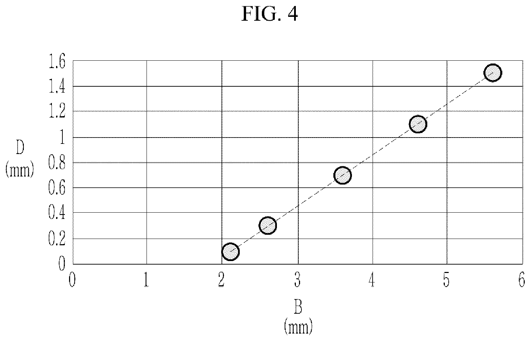

Equation 4 may be obtained by manufacturing the case 400 in various sizes with respect to the electrode assembly 200, and then determining an optimal dimension of the case 400 with respect to the thickness of the electrode assembly 200. Referring to FIG. 4, the relationship between B and D may be obtained through repetitive experiments, and equation 4 may be a relation equation representing the co-relationship of B and D.

That is, the height of the space in which the electrode tabs 211 are located in the case 400 in relation to the thickness of the electrode assembly 200 may be defined by equation 4. Therefore, when manufacturing the rechargeable battery 100 by using equation 4, standardization of the size of the case 400 may be performed.

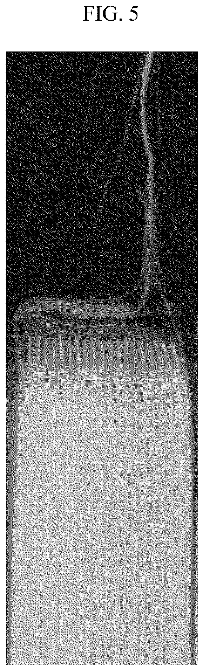

FIG. 5 is a CT image photographing an exemplary rechargeable battery 100 manufactured according to at least equations 1 and 2 and for example equations 1 to 4. By using at least equations 1 and 2 and for example equation 1 to 4 in the process of manufacturing a rechargeable battery 100 according to some embodiments, standardization may be performed, and, accordingly, the rechargeable battery 100 may be manufactured to be appropriate for the target design.

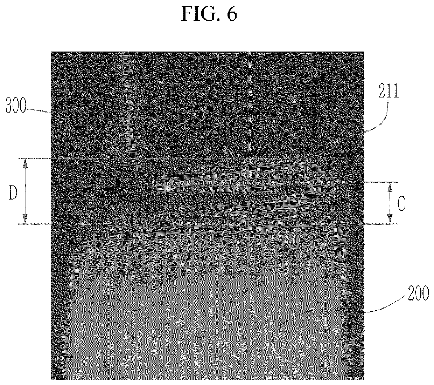

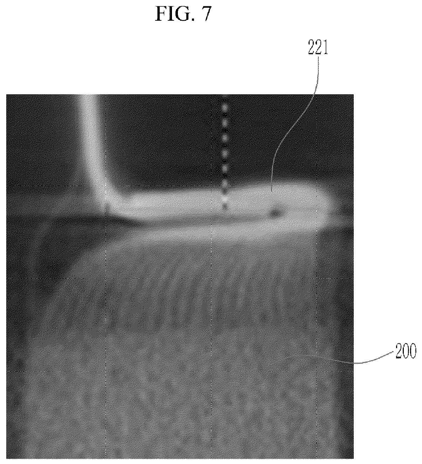

FIG. 6 is a CT image photographing the first electrode plate of a rechargeable battery 100 manufactured by using at least equations 1 and 2 and for example equation 1 to 4 according to some embodiments. FIG. 7 is a CT image photographing the second electrode plate of the rechargeable battery 100 manufactured by using at least equations 1 and 2 and for example equation 1 to 4.

As indicated in FIGs. 6 and 7, the electrode tabs 221 of the rechargeable battery 100 on the lower side located adjacent to the electrode assembly 200 and the electrode tabs 221 on the upper side are disposed parallel to each other. In addition, the height C occupied by the electrode tabs 221 is minimized. In addition, the distance D from the end portion of the electrode assembly 200 to the case 400 is also minimized.

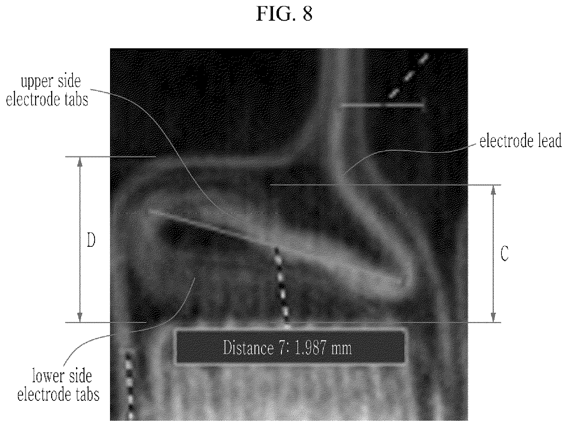

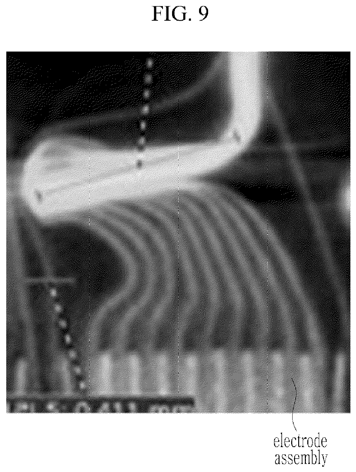

FIG. 8 is a CT image photographing the first electrode plate of a rechargeable battery manufactured without conforming to at least equations 1 and 2 and for example equations 1 to 4. FIG. 9 is a CT image photographing the second electrode plate of the rechargeable battery manufactured without using at least equations 1 and 2 and for example equations 1 to 4.

As indicated in FIGs. 8 and 9, in the rechargeable battery according to the comparative example, the electrode tabs on the upper side are excessively bent compared to the electrode tabs on the lower side located adjacent to the electrode assembly. In addition, the electrode lead of the rechargeable battery has a deformed shape, which is different from the "L" shape in FIG. 6, for example.

In addition, deformation may occur as the first electrode plate of the electrode assembly is pressed by the electrode tabs. In addition, the height C occupied by the electrode tabs and the distance D from the end portion of the electrode assembly to the case may be large relative to the values in FIG. 6, for example.

Additionally, the distance from or of the bent portion in the electrode tab to the bent portion in the electrode lead for the rechargeable battery in FIG. 8 may be 90.5% with respect to the thickness B of the electrode assembly. In addition, the distance from or of the bent portion in the electrode tab to the bent portion in the electrode lead of FIG. 9 may be 81.4% with respect to the thickness B of the electrode assembly.

As described above, unlike a rechargeable battery 100 according to embodiments described with reference to FIGs. 1 to 7, in FIG. 8 and FIG. 9, the distance E from or of the bent portion in the electrode tab to the bent portion in the electrode lead is out of the range of 73% to 77% with respect to the thickness B of the electrode assembly.

On the other hand, a rechargeable battery 100 according to embodiments detailed herein satisfies at least equations 1 and 2 and for example equations 1 to 4. Therefore, according to processes of manufacturing a rechargeable battery according to one or more embodiments, electrode tabs and electrode leads are manufactured with standardized dimensions in conjunction with the size of the electrode assembly and the case. Therefore, a rechargeable battery 100 according to the one or more embodiments may be manufactured precisely according to a target design.

It is to be understood that the disclosure is not limited to only the embodiments detailed herein, but is also intended to cover various modifications included within the features of the present disclosure

**Claims**

1. A rechargeable battery (100), comprising:

    an electrode assembly (200) comprising a separation layer (230), a plurality of electrode plates (210, 220) stacked interposing the separation layer (230), and electrode tabs (211, 221), each electrode tab (211, 221) extending from a respective one of the plurality of electrode plates (210, 220), the electrode tabs (211, 221) having a bent portion (211a);
    an electrode lead (300, 300A, 300B) connected to the electrode tabs (211, 221), and having a bent portion (211a); and
    a case (400) configured to accommodate the electrode assembly (200),
    wherein the electrode tabs (211, 221) comprise a lower side located adjacent to the electrode assembly (200) and extending to the bent portion (211a) of the electrode tabs (211, 221), and an upper side that is a remaining portion of the electrode tabs (211, 221), which are disposed parallel to each other, and
    wherein the electrode assembly (200), the electrode lead (300, 300A, 300B), and the case (400) satisfy a first equation defining $E = B * [0.73 \text{ to } 0.77]$ and a second equation defining $C = D * [0.3 \text{ to } 0.7]$, in particular $= D * [0.4 \text{ to}$

0.6], in particular = D * 0.5, where B indicates a thickness of the electrode assembly (200), C indicates a height occupied by the electrode tabs (211, 221) of the electrode assembly (200), D indicates a distance from a portion where the case (400) and the electrode lead (300, 300A, 300B) are coupled to each other to an end portion of the electrode assembly (200), and E indicates a distance from the bent portion (211a) in the electrode tabs (211, 221) to the bent portion (211a) in the electrode lead (300, 300A, 300B).

2. The rechargeable battery (100) of claim 1, wherein the electrode assembly (200), the electrode lead (300, 300A, 300B), and the case (400) satisfy a third equation defining B = A - [0.4 mm to 0.5 mm] and a fourth equation defining D = [B * 0.4] - 0.74 mm, where A indicates a thickness of the rechargeable battery (100) and mm is millimeters.

3. The rechargeable battery (100) of claim 1 or 2, wherein, in the electrode lead (300, 300A, 300B), a portion coupled to the electrode tabs (211, 221) and a portion coupled to the case (400) are disposed to be perpendicular to each other.

4. The rechargeable battery (100) of any of claims 1 to 3, wherein the plurality of electrode plates (210, 220) comprises a positive electrode plate (210, 220) and a negative electrode plate (210, 220).

5. The rechargeable battery (100) of any of claims 1 to 4, wherein the electrode tabs (211, 221) comprise a positive electrode tab (211, 221) and a negative electrode tab (211, 221).

6. The rechargeable battery (100) of any of claims 1 to 5, wherein the electrode assembly (200) comprises an insulation member (240) surrounding a portion of the electrode lead (300, 300A, 300B) coupled to the case (400).

7. The rechargeable battery (100) of any of claims 1 to 6, wherein a thickness of the rechargeable battery (100) is in a range of 1.5 mm to 6.5 mm.

8. The rechargeable battery (100) of any of claims 1 to 7, wherein a thickness of the electrode assembly (200) is in a range of 1 mm to 6 mm.

9. A method of manufacturing a rechargeable battery (100), the method comprising:

disposing an electrode assembly (200) in a case (400), the electrode assembly (200) comprising a separation layer (230), a plurality of electrode plates (210, 220) stacked interposing the separation layer (230), and electrode tabs (211, 221), each electrode tab (211, 221) extending from a respective one of the plurality of electrode plates (210, 220), the electrode tabs (211, 221) having a bent portion (211a),
wherein an electrode lead (300, 300A, 300B) is connected to the electrode tabs (211, 221), the electrode lead (300, 300A, 300B) having a bent portion (211a) and
wherein the electrode tabs (211, 221) comprise a lower side located adjacent to the electrode assembly (200) and extending to the bent portion (211a) of the electrode tabs (211, 221), and an upper side that is a remaining portion of the electrode tabs (211, 221), which are disposed parallel to each other, and
wherein the electrode assembly (200), the electrode lead (300, 300A, 300B), and the case (400) satisfy a first equation defining E = B * [0.73 to 0.77] and a second equation defining C = D * [0.3 to 0.7], in particular = D * [.4 to 0.6], in particular = D * 0.5, where B indicates a thickness of the electrode assembly (200), C indicates a height occupied by the electrode tabs (211, 221) of the electrode assembly (200), D indicates a distance from a portion where the case (400) and the electrode lead (300, 300A, 300B) are coupled to each other to an end portion of the electrode assembly (200), and E indicates a distance from the bent portion (211a) in the electrode tabs (211, 221) to the bent portion (211a) in the electrode lead (300, 300A, 300B).

FIG. 1

FIG. 2

FIG. 3

FIG. 4

FIG. 5

FIG. 6

FIG. 7

FIG. 8

FIG. 9

electrode
assembly

Europäisches
Patentamt

European
Patent Office

Office européen
des brevets

# EUROPEAN SEARCH REPORT

**Application Number**

EP 25 17 1290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 254 535 A1 (DONGGUAN POWERAMP TECH LIMITED [CN]) 4 October 2023 (2023-10-04)<br>* paragraphs [0025] - [0027] *<br>* paragraphs [0033] - [0035] *<br>* paragraphs [0045] - [0067] *<br>* figures 3, 4 *<br>- - - - - | 1-9 | INV.<br>H01M50/105<br>H01M50/533<br>H01M50/54 |
| X | US 2012/202105 A1 (SHINYASHIKI YOSHITAKA [JP] ET AL) 9 August 2012 (2012-08-09)<br>* paragraphs [0098] - [0130] *<br>* figures 12-17 *<br>- - - - - | 1-9 | |
| X | JP 2023 087373 A (PRIME PLANET ENERGY & SOLUTIONS INC) 23 June 2023 (2023-06-23)<br>* figures 2, 3, 17 *<br>- - - - - | 1-9 | |

**TECHNICAL FIELDS SEARCHED (IPC)**

H01M

The present search report has been drawn up for all claims

| Place of search | Date of completion of the search | Examiner |
|---|---|---|
| The Hague | 20 August 2025 | Pirozzi, Giuseppe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 1290

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2025

| Patent document cited in search report | | Publication date | Patent family member(s) | | Publication date |
|---|---|---|---|---|---|
| EP 4254535 | A1 | 04-10-2023 | CN | 114649559 A | 21-06-2022 |
| | | | EP | 4254535 A1 | 04-10-2023 |
| US 2012202105 | A1 | 09-08-2012 | CN | 102629678 A | 08-08-2012 |
| | | | EP | 2485298 A1 | 08-08-2012 |
| | | | JP | 5844052 B2 | 13-01-2016 |
| | | | JP | 2012164470 A | 30-08-2012 |
| | | | US | 2012202105 A1 | 09-08-2012 |
| JP 2023087373 | A | 23-06-2023 | JP | 7373544 B2 | 02-11-2023 |
| | | | JP | 2023087373 A | 23-06-2023 |

EPO FORM P0459

For more details about this annex : see Official Journal of the European Patent Office, No. 12/82